# EUROPÄISCHE PATENTSCHRIFT

(11) **EP 0 660 078 B1**
(45) Veröffentlichungstag und Bekanntmachung des Hinweises auf die Patenterteilung: **15.03.2000**
(21) Anmeldenummer: 94119584.4
(22) Anmeldetag: 11.12.1994
(51) Int. Cl.: G01B 11/24

(54) **Vorrichtung zur Erzeugung streifenartiger Lichtmuster**
Apparatus for the generation of fringe-like light patterns
Dispositif pour former un motif optique filiforme

(30) Priorität: 15.12.1993 DE 4342830
(43) Veröffentlichungstag der Anmeldung: 28.06.1995
(73) Patentinhaber: Häusler, Gerd, Prof. Dr., D-91056 Erlangen (DE); Lampalzer, Ralf, 90607 Rückersdorf (DE)
(72) Erfinder: Lampalzer, Ralf, D-90607 Rückersdorf (DE)
(74) Vertreter: Heim, Hans-Karl, Dipl.-Ing.

(56) Entgegenhaltungen:
- FR-A- 2 635 965
- US-A- 5 309 222
- OPTIK, Bd. 89,Nr. 3, 1992 STUTTGART, Seiten 118-122, GRUBER, HÄUSLER
- PATENT ABSTRACTS OF JAPAN vol. 017 no. 563 (P-1628) ,12.Oktober 1993 & JP-A-05 164522 (FANUC LTD) 29.Juni 1993,
- PATENT ABSTRACTS OF JAPAN vol. 009 no. 048 (P-338) ,28.Februar 1985 & JP-A-59 187319 (CITIZEN TOKEI KK) 24.Oktober 1984,

## Beschreibung

Es wird eine Vorrichtung beschrieben, mit der streifenartige Lichtmuster im Raum erzeugt werden können. Die Streifenmuster können mit großer geometrischer Genauigkeit wie auch mit großer Genauigkeit der Beleuchtungsstärke erzeugt werden. Die Beleuchtungsstärke kann hoch sein. Das Streifenmuster kann schnell gewechselt werden.

Solche Muster werden vorzugsweise in Vorrichtungen für die Messung der Form von Oberflächen benutzt. Die Streifenmuster werden dabei unter einem Beleuchtungswinkel auf das Prüfobjekt projiziert und unter einem anderen (Beobachtungs-) Winkel beobachtet (Triangulation). Aus der lokalen Verschiebung des beobachteten Musters kann die Form des Prüfobjektes bestimmt werden. Im allgemeinen sind dazu mehrere verschiedene Streifenmuster nacheinander zu projizieren und zu beobachten, wie z. B. in der Druckschrift von M. Halioua, H. Liu, und V. Srinivasan "Automated phase-measuring profilometry of 3D diffuse objects", Appl. Opt. 23 (1984) 3105-3108 beschrieben.

Die konkrete technische Aufgabe, die eine Vorrichtung nach Anspruch 1 erfüllen soll, besteht darin, eine bestimmte Abfolge von Lichtmustern, vorzugsweise für die Messung der Form von Oberflächen zu erzeugen, wobei jedes der streifenartigen Lichtmuster sowohl eine hohe Beleuchtungsstärke als auch und ein hohe Präzision in der aufprojizierten Beleuchtungsstärke aufweisen soll.

Es sind eine Reihe von Vorrichtungen zur Projektion von Streifenmustern für die Formmessung bekannt. Im Prospekt der Fa. ABW, Automatisierung Bildverarbeitung Dr. Wolf, Strogäustrasse 5, 7305 Neuhausen a. d. F., "Linienprojektor Typ LCD 320", ist ein Projektor beschrieben, der mit Hilfe eines Flüssigkristalls funktioniert. Der Flüssigkristall hat streifenförmige, also sehr schmale aber hohe Elektroden, die einzeln angesteuert werden können. Bei passender Ansteuerung kann man mit den einzelnen Elektroden eine beliebige streifenförmige Maske zusammensetzen.

Im der Patentschrift FR-A-2 635 965 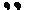 Sonde optique pour la mesure tridimensionnelle des dents dans la cavité buccale et procédé de mise en oevre" wird eine Vorrichtung beschrieben, die streifenartige Lichtstrukturen mit Hilfe eines Video-Matrix-LCD-Maske erzeugt.

In beiden Fällen wird die Maske mit Hilfe einer sphärischen Linse auf das Objekt projiziert und erzeugt dort ein streifenförmiges Lichtmuster.

Nachteilig ist, daß Flüssigkristallmodulatoren nur wenige Grautöne wiedergeben können. Im Fall der Maske mit streifenförmigen Elektroden werden sogar nur binäre Muster erzeugt. (hell oder dunkel) Da aber die Genauigkeit der Grautöne direkt in die erreichbare Messunsicherheit eingeht, wäre eine präzise Erzeugung eines gewünschten Grautonmusters wünschenswert.

Weiter ist die Anzahl der Elektroden beschränkt, im Fall der streifenförmigen Maske sind meist nicht mehr als 512 Elektroden möglich. Bei Verwendung eines Video-Matrix-LCDs ergibt sich die Zahl der Streifen aus der Zahl der Spalten des Video-Matrix-LCDs. Damit weisen die Streifen eine räumliche Quantisierung auf. Auch diese beeinträchtigt die erzielbare Genauigkeit der Formmessung.

Diese Maske wird mit einer sphärischen Linse auf das Objekt projiziert und erzeugt dort ein streifenförmiges Lichtmuster. Nachteilig ist, daß Flüssigkristallmasken nur wenige Grautöne wiedergeben können, oft werden sogar nur binäre Muster erzeugt (hell oder dunkel). Da aber die Genauigkeit der Grautöne direkt in die erreichbare Meßgenauigkeit der Form eingeht, wäre die präzise Erzeugung eines gewünschten Grautonmusters, wünschenswert. Weiter ist die Anzahl der Elektroden beschränkt, meist nicht größer als 512, und damit weist das Streifenmuster eine räumliche Quantisierung auf. Auch diese beeinträchtigt die erzielbare Genauigkeit der Formmessung.

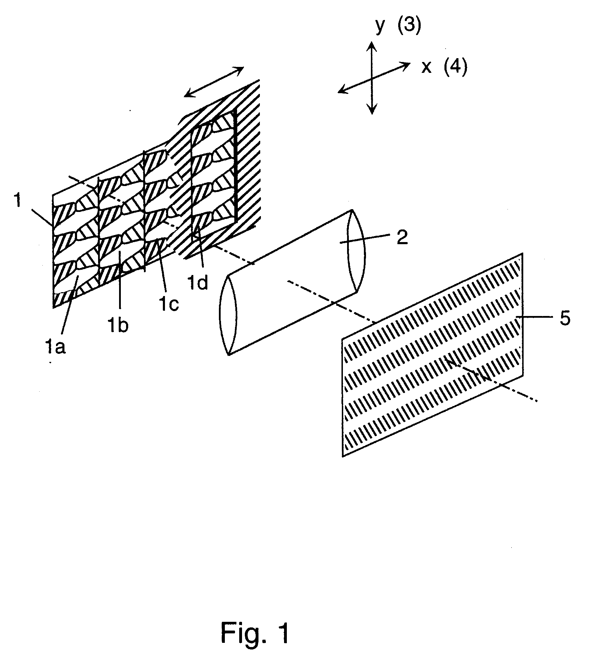

Es wurde eine Methode zur Überwindung dieser Schwierigkeiten angegeben (M. Gruber und G. Häusler, "Simple, robust and accurate phase-measuring triangulation", Optik 89, 3 (1992) 118-122). Das Prinzip ist in Fig. 1 skizziert: eine binäre Maske (1), bestehend aus den Teilmasken (1a), (1b), (1c), (1d), wird mit einer Zylinderlinse (2) auf das Objekt projiziert. Es wird keine sphärische Linse benutzt. Dadurch findet wie in Fig. 1 angegeben eine Abbildung (Strahlvereinigung) nur in y-Richtung (3) statt. Das Bild jedes Maskenpunktes ist ein Strich in x-Richtung (4). Infolgedessen weist das projizierte Lichtmuster (5) Streifen in x-Richtung auf. Die Beleuchtungsstärke entlang der x- Richtung (4) ist konstant. Der Verlauf der Beleuchtungsstärke in y-Richtung (5) ist proportional zum transparenten Anteil der Maske entlang der x-Richtung (4) in der jeweiligen Höhe y.

Mit der astigmatischen Projektion können auch mit binären Masken präzise Grautonmuster erzeugt werden.

Das Problem, mehrere Teilmasken (1a) - (1d) nacheinander projizieren zu müssen, wird von Gruber und Häusler folgendermaßen gelöst: Es werden mehrere Teilmasken (im gezeigten Beispiel (1a) - (1d)), deren Bild jeweils dem gewünschten Lichtmuster (5) entspricht, zu einer Maske (1) nebeneinander angeordnet. Mit Hilfe einer in x-Richtung (4) verschiebbaren Blende (9) wird wie in Fig. 1 angegeben, die gewünschte Teilmaske zum gewünschten Zeitpunkt freigegeben.

Diese Lösung zeigt folgende Nachteile: 1. dadurch daß die Teilmasken nebeneinander angeordnet sind, jedoch jeweils nur eine davon projiziert wird, wird ein großer Teil der ausgeleuchteten Maskenfläche abgeblendet, dadurch geht ein großer Teil der erreichbaren Beleuchtungsstärke verloren. 2. Die Teilmasken sind an unterschiedlichen Orten im Objektfeld. Dadurch wirken unvermeidbare Aberrationen unterschiedlich auf die verschiedenen Teilmasken, was die erreichbare Meßgenauigkeit beeinträchtigt. 3. Es ist eine mechanische Bewegung der Blende notwendig.

Es ist daher Aufgabe der Erfindung, eine Vorrichtung zur Erzeugung streifenartiger Lichtmuster derart auszubilden, daß die obengenannten Nachteile beseitigt werden.

Die Lösung dieser Aufgabe ergibt sich aus den Merkmalen des Anspruches 1.

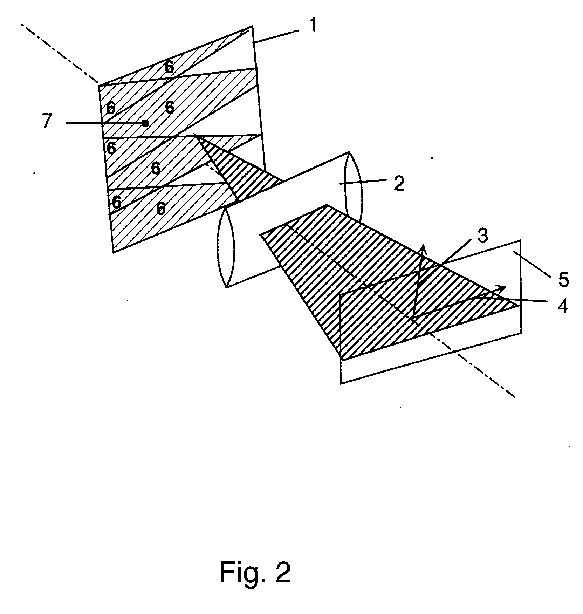

Aus Fig. 2 ist ersichtlich, daß eine Maske (1) benutzt wird, die aus mehreren Teilflächen (6) besteht, deren Transparenz im allgemeinen getrennt elektrisch gesteuert werden kann. Diese Teilflächen sind so geformt und angeordnet, daß durch Kombination von transparenten und nicht transparenten Teilflächen jedes der erwünschten Lichtmuster erzeugt werden kann.

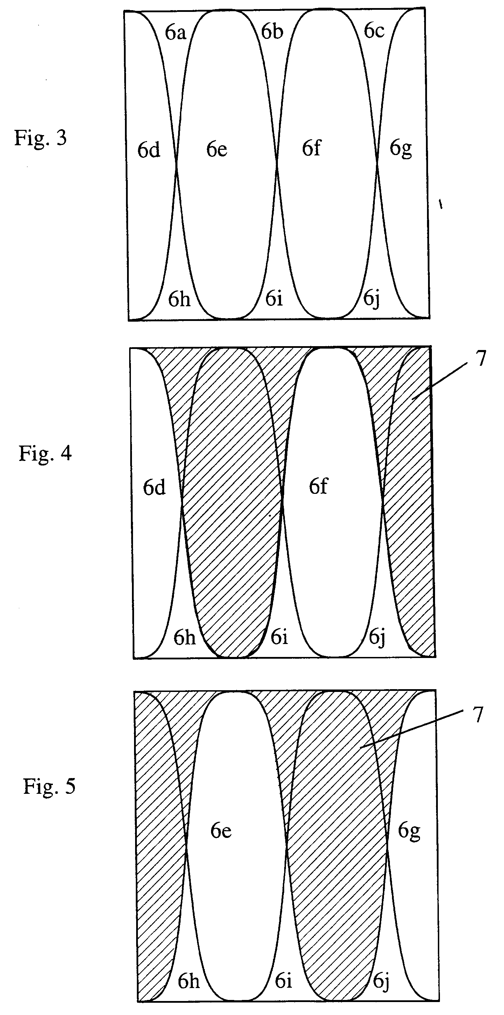

Das Prinzip der Kombination von Teilflächen wird nun an einem Beispiel zweier verschobener Sinus-Lichtmuster erklärt (Fig. 3). Andere Lichtmuster, auch mehr als zwei Lichtmuster sind nach dem gleichen Prinzip realisierbar.

Die Teilflächen sind mosaikartig ineinandergeschachtelt und so geformt, daß manche Teilflächen zur Erzeugung verschiedener Streifenmuster mehrfach verwendet werden können, dadurch lassen sich im allgemeinen auf der Fläche einer Teilmaske (7) alle Teilmasken unterbringen: die Lichtausbeute wird erhöht, die Aberrationen wirken auf alle Teilmasken gleich.

Eine Methode, die Teilflächen zu generieren, besteht darin, daß die Graphen der Funktionen I_{*k*}(y) gemeinsam in ein Diagramm eingetragen werden, wie in Fig. 3 gezeigt. Dabei bedeutet I_{*k*}(y) den Helligkeitsverlauf im k-ten gewünschten Lichtmuster.

Die Funktionen I_{*k*}(y) begrenzen Teilflächen (6a) - (6j), wie in Fig. 3 beispielhaft gezeigt. Die Teilflächen werden als hell- oder dunkelsteuerbare Flächen einer Maske realisiert. Zum Beispiel können die Teilflächen Elektroden einer Flüssigkristallanzeige sein oder als Leuchtdioden ausgebildet werden. Wenn z. B. die Teilflächen (6a, 6b, 6c, 6e, 6g) dunkelgesteuert werden, kann man eine Maske wie in Fig. 4 gezeigt, erzeugen. Auf der gleichen Grundfläche kann durch einfaches Umsteuern der Teilflächen eine ganz andere Maske, wie in Fig. 5 gezeigt, erzeugt werden. Dort sind die Teilflächen (6a, 6b, 6c, 6d, 6f) dunkelgesteuert.

So können Masken in beliebiger Form mit sehr hoher Präzision ohne räumliche Quantisierung erzeugt werden. In Verbindung mit der astigmatischen Projektion ist die Erzeugung nahezu beliebiger Streifenmuster mit sehr hoher Genauigkeit der Grautonwiedergabe möglich.

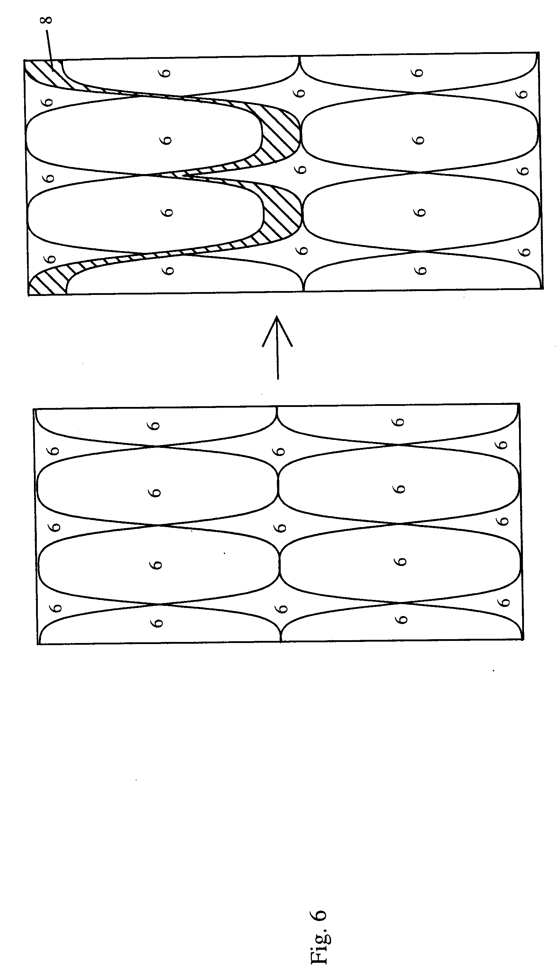

Die Anzahl der getrennt steuerbaren Elektroden kann im allgemeinen verringert werden, gegenüber der Anzahl von Teilflächen. Dies ist möglich, weil die Muster im allgemeinen periodisch sind. Beim Beispiel von Fig. 4, 5 können die Teilflächen (6d, 6f) eine gemeinsame Elektrode erhalten, ebenso die Teilflächen (6e, 6g). Außerdem weisen manche Teilflächen für alle Teilmasken eine konstante Helligkeit auf. Beim Beispiel von Fig. 4 und Fig. 5 sind die Teilflächen (6a, 6b, 6c) immer dunkel, und die Teilflächen (6h, 6i, 6j) immer hell und können durch eine gemeinsame Elektrode bedient werden oder brauchen bei passender Abdeckung nicht kontaktiert werden.

Durch gemeinsame Hell- oder Dunkelsteuerung aller Teilflächen kann die gesamte Maskenfläche transparent oder undurchsichtig gemacht werden.

Bei komplizierten Masken mit sehr vielen Teilflächen entstehen i.a. Inseln, d.h. Teilflächen, die vom Rand durch andere Teilflächen getrennt sind. Die Zuführung der Kontakte über andere Teilflächen kann vermieden werden, indem die Teilflächen in x-Richtung auseinandergezogen werden, wie in Fig. 6 gezeigt. Die entstehenden Spalte (8) werden undurchsichtig abgedeckt. In den Spalten können die Zuleitungen verlaufen. Das projizierte Muster ändert sich dabei nicht, wegen der Integration durch die astigmatische Optik.

Um zu komplizierte Strukturen auf der Maske zu vermeiden, können die Details der Maske mit Hilfe einer nicht steuerbaren, undurchsichtigen Abdeckung realisiert werden, hinter der sich gröbere, steuerbare Teilflächen befinden. Eine solche Abdeckung kann mit Hilfe einer Chrommaske realisiert werden.

Für die Steuerung der Helligkeit stehen viele Technologien zur Verfügung: Flüssigkristall- Technologie, der elektrooptische Effekt, Kerr Effekt, Ultraschall-Modulatoren. Es sind auch aktive Bauelemente denkbar, wie z. B. Leuchtdioden oder Glimmlampen bzw. Glühlampen, Plasmaentladungen die die Form der Teilflächen haben.

## Patentansprüche

1. Vorrichtung zur Erzeugung streifenartiger Lichtmuster (5) mit einer beleuchteten oder aktiv leuchtenden Maske (1) und
einem astigmatischen Abbildungssystem mit mindestens einer Zylinderlinse (2),
dadurch **gekennzeichnet,**
daß die Maske (1) aus Teilflächen (6) zusammengesetzt ist,
daß die Transparenz oder die Helligkeit der Teilflächen (6) steuerbar ist,
daß die Teilflächen (6) so hell- oder dunkelgesteuert werden, daß die entstehende Kombination eine gewünschte Teilmaske (7) ergibt, deren astigmatisches Bild das gewünschte Lichtmuster (5) ist,
daß durch verschiedene Kombinationen von hell- oder dunkelgesteuerten Teilflächen (6) zwischen verschiedenen vorgegebenen Lichtmustern umgeschaltet werden kann und
daß die Teilflächen (6) so ausgeformt sind, daß der helle Anteil in mindestens einer der entstehenden Teilmasken (7) sich in Richtung senkrecht (x'-Achse) zur Achse (y'-Achse) der Zylinderlinse (2) kontinuierlich ändert und auf diese Weise mindestens ein Lichtmuster (5) ohne sprunghafte Helligkeitsänderungen erzeugbar ist.

2. Vorrichtung nach Anspruch 1,
dadurch **gekennzeichnet,**
daß die Teilflächen (6) so geformt sind, daß einige der Teilflächen (6) nicht nur bei einem, sondern bei mehreren Lichtmustern (5) hellgesteuert sind.

3. Vorrichtung nach einem der Ansprüche 1 oder 2,
dadurch **gekennzeichnet,**
daß die zur Erzeugung aller Teilmasken (7) notwendigen Teilflächen (6) auf der Fläche nur einer Teilmaske untergebracht werden, indem die Teilflächen (6) mosaikartig verschachtelt sind.

4. Vorrichtung nach einem der Ansprüche 1 bis 3,
dadurch **gekennzeichnet,**
daß die Maske (1) transparent- und opak-steuerbare Teilflächen (6) aufweist.

5. Vorrichtung nach Anspruch 4,
dadurch **gekennzeichnet,**
daß die Teilflächen (6) der Maske (1) unter Ausnutzung des Kerr-Effekts oder des Prinzips der Ultraschallmodulation transparent- und opak-steuerbar sind.

6. Vorrichtung nach Anspruch 4,
dadurch **gekennzeichnet,**
daß die Teilflächen (6) der Maske (1) transparent- und opaksteuerbare Flüssigkristalle aufweisen.

7. Vorrichtung nach einem der Ansprüche 1 bis 3,
dadurch **gekennzeichnet,**
daß die Maske (1) aus aktiven Leuchtelementen zusammengesetzt ist.

8. Vorrichtung nach Anspruch 7,
dadurch **gekennzeichnet,**
daß die aktiven Leuchtelemente als Leuchtdioden, Glimmlampen, Glühlampen oder Plasma-Entladungslampen ausgebildet sind.

9. Vorrichtung nach einem der vorhergehenden Ansprüche,
dadurch **gekennzeichnet,**
daß mehrere Teilmasken (7) auf der Maske (1) schaltbar sind, bei denen in Richtung senkrecht zur Achse der Zylinderlinse (2) der helle Anteil einen sinusartigen Verlauf hat.

10. Vorrichtung nach Anspruch 9,
dadurch **gekennzeichnet,**
daß auf der Maske (1) genau vier verschiedene sinusartige Teilmasken (7) schaltbar sind, wobei die vier verschiedenen sinusartigen Verläufe jeweils um π/2 phasenverschoben sind.

11. Vorrichtung nach einem der vorhergehenden Ansprüche,
dadurch **gekennzeichnet,**
daß die Maske (1) zusätzlich dauernd dunkle Teilflächen aufweist.

12. Vorrichtung nach einem der vorhergehenden Ansprüche,
dadurch **gekennzeichnet,**
daß die Teilflächen (6) in Richtung (4) parallel zur Achse der Zylinderlinse (2) auseinandergezogen sind und
daß die entstehenden Spalte (8) dafür genutzt werden, die Zuleitungen zur Hell- oder Dunkelsteuerung der Teilflächen (6) aufzunehmen.

## Claims

1. Apparatus for producing fringe-like light patterns (5) with an illuminated or actively luminous mask (1) and an astigmatic imaging system with at least one cylindrical lens (2), characterized in that
the mask (1) is formed from subareas (6),
the transparency or brightness of the subareas (6) is controllable, the subareas (6) are so light or dark-controlled, that the resulting combination gives a desired partial mask (7), whose astigmatic image is the desired light pattern (5),
by different combinations of light or dark-controlled subareas (6) it is possible to switch between different, predetermined light patterns and the subareas (6) are shaped in such a way that the bright part in at least one of the resulting partial masks (7) continuously changes in the direction perpendicular (x'-axis) to the axis (y'-axis) of the cylindrical lens (2) and in this way it is possible to produce at least one light pattern (5) without sudden brightness changes.

2. Apparatus according to claim 1, characterized in that the subareas (6) are shaped in such a way that some of the subareas (6) are not only light-controlled for one, but instead for several light patterns (5).

3. Apparatus according to one of the claims 1 to 2, characterized in that the subareas (6) necessary for producing all the partial masks (7) are placed on the surface of a single partial mask, in that the subareas (6) are nested in mosaic-like manner.

4. Apparatus according to one of the claims 1 to 3, characterized in that the mask (1) has transparent and opaque-controllable subareas (6).

5. Apparatus according to claim 4, characterized in that the subareas (6) of the mask (1) are transparent and opaque-controllable utilizing the Kerr effect or the ultrasonic modulation principle.

6. Apparatus according to claim 4, characterized in that the subareas (6) of the mask (1) have transparent and opaque-controllable liquid crystals.

7. Apparatus according to one of the claims 1 to 3, characterized in that the mask (1) comprises active lighting elements.

8. Apparatus according to claim 7, characterized in that the active lighting elements are constructed as light emitting diodes, glow lamps, filament lamps or plasma discharge lamps.

9. Apparatus according to one of the preceding claims, characterized in that several partial masks (7) are switchable on the mask (1), in which in the direction perpendicular to the axis of the cylindrical lens (2), the bright part has a sinusoidal path.

10. Apparatus according to claim 9, characterized in that on the mask (1) are switchable precisely four different sinusoidal partial masks (7), the four different sinusoidal paths being in each case phase-shifted by π/2.

11. Apparatus according to one of the preceding claims, characterized in that the mask (1) additionally has permanently dark subareas.

12. Apparatus according to one of the preceding claims, characterized in that the subareas (6) are spread out in the direction (4) parallel to the axis of the cylindrical lens (2) and that the resulting gaps (8) are used for receiving the leads for the light or dark control of the subareas (6).

## Revendications

1. Dispositif pour former des motifs lumineux (5) de type bandes au moyen d'un masque (1) éclairé ou activement lumineux et d'un système de reproduction astigmatique avec au moins une lentille cylindrique (2),
***caractérisé en ce que*** le masque (1) est composé de surfaces fractionnaires (6), ***en ce que*** la transparence ou la luminosité des surfaces fractionnaires (6) peut être réglée, ***en ce que*** les surfaces fractionnaires (6) sont réglées pour être claires ou sombres de telle façon que la combinaison obtenue produise un sous-masque souhaité (7), dont l'image astigmatique est le motif lumineux (5) souhaité, ***en ce que***, par différentes combinaisons de surfaces fractionnaires (6) réglées de manière claire ou sombre, il est possible de changer le réglage entre différents motifs lumineux prédéterminés, ***et en ce que*** les surfaces fractionnaires (6) sont formées de façon que la partie claire dans au moins l'un des sous-masques (7) en résultant varie continûment dans la direction perpendiculaire (axe x') à l'axe (axe y') de la lentille cylindrique (2) et que, de cette manière, au moins un motif lumineux (5) sans variation brusque de luminosité puisse être produit.

2. Dispositif selon la Revendication 1, ***caractérisé en ce que*** les surfaces fractionnaires (6) sont formées de telle manière que certaines des surfaces fractionnaires (6) soient réglées pour être claires non seulement pour un, mais également pour plusieurs motifs lumineux (5).

3. Dispositif selon l'une quelconque des Revendications 1 ou 2, ***caractérisé en ce que*** les surfaces fractionnaires (6) nécessaires pour produire tous les sous-masques (7) sont placées sur la surface d'un seul sous-masque, par imbrication des surfaces fractionnaires (6) à la manière d'une mosaïque.

4. Dispositif selon l'une quelconque des Revendications 1 à 3, ***caractérisé en ce que*** le masque comporte des surfaces fractionnaires (6) réglables pour être transparentes ou opaques.

5. Dispositif selon la Revendication 4, ***caractérisé en ce que*** les surfaces fractionnaires (6) du masque (1) sont réglables pour être transparentes ou opaques en exploitant l'effet Kerr ou le principe de la modulation par ultrasons.

6. Dispositif selon la Revendication 4, ***caractérisé en ce que*** les surfaces fractionnaires (6) du masque (1) comportent des cristaux liquides réglables pour être transparents ou opaques.

7. Dispositif selon l'une quelconque des Revendications 1 à 3, ***caractérisé en ce que*** le masque (1) est composé d'éléments lumineux actifs.

8. Dispositif selon la Revendication 7, ***caractérisé en ce que*** les éléments lumineux actifs sont conformés en diodes électro-luminescentes, lampes fluorescentes, lampes à incandescence ou lampes à décharge plasma.

9. Dispositif selon l'une quelconque des Revendications précédentes, ***caractérisé en ce que*** plusieurs sous-masques (7) peuvent être mis en circuit sur le masque (1), dans lesquels, dans la direction perpendiculaire à l'axe de la lentille cylindrique (2), la partie claire présente un profit de type sinusoïdal.

10. Dispositif selon la Revendication 9, ***caractérisé en ce qu'***exactement quatre sous-masques (7) différents de type sinusoïdal peuvent être mis en circuit sur le masque (1), les quatre profils sinusoïdaux différents présentant à chaque fois un décalage de phase de π/2.

11. Dispositif selon l'une quelconque des Revendications précédentes, ***caractérisé en ce que*** le masque (1) comporte en plus des surfaces fractionnaires en permanence sombres.

12. Dispositif selon l'une quelconque des Revendications précédentes, ***caractérisé en ce qu*****e** les surfaces fractionnaires (6) sont écartées les unes des autres dans la direction (4) parallèle à l'axe de la lentille cylindrique (2), et ***en ce que*** l'espace libre (8) résultant est utilisé pour recevoir les fils destinés au réglage clair ou sombre des surfaces fractionnaires (6).
